# EUROPÄISCHE PATENTSCHRIFT

(11) **EP 2 998 515 B1**
(45) Veröffentlichungstag und Bekanntmachung des Hinweises auf die Patenterteilung: **01.02.2017**
(21) Anmeldenummer: 15183543.6
(22) Anmeldetag: 02.09.2015
(51) Int. Cl.: F01D 5/28, F01D 5/30, F01D 11/00, F02K 3/06

(54) **FÜLLELEMENTE EINES FANS EINER GASTURBINE**
FILLING ELEMENTS OF A FAN OF A GAS TURBINE
ÉLEMENTS DE REMPLISSAGE D'UN VENTILATEUR D'UNE TURBINE A GAZ

(30) Priorität: 08.09.2014 DE 102014217884
(43) Veröffentlichungstag der Anmeldung: 23.03.2016
(73) Patentinhaber: Rolls-Royce Deutschland Ltd & Co KG, 15827 Blankenfelde-Mahlow (DE)
(72) Erfinder: DUO´, Dr. Pierangelo, 12101 Berlin (DE); SCHREIBER, Karl, 15838 Am Mellensee (DE)
(74) Vertreter: Hoefer & Partner Patentanwälte mbB

(56) Entgegenhaltungen:
- EP-A2- 1 013 886
- EP-A2- 2 253 802
- EP-A2- 2 463 482
- EP-A2- 2 594 773

## Beschreibung

Die Erfindung bezieht sich auf Füllelemente eines Fans einer Gasturbine und insbesondere auf eine Fluggasturbine gemäß den Merkmalen des Oberbegriffs des Anspruches 1.

Im Einzelnen bezieht sich die Erfindung auf eine Fluggasturbine mit einer Fan-Scheibe, an welcher um den Umfang verteilt, zueinander einen Zwischenraum bildendende Fan-Schaufeln befestigt sind, mit einer rückseitig zu der Fan-Scheibe angeordneten Dichtscheibe und mit einem an der Vorderseite der Fan-Scheibe gelagerten Einlaufkonus sowie mit in den Zwischenräumen angeordneten Füllelementen.

Zum Stand der Technik wird auf die GB 2 363 170 A verwiesen. Der Stand der Technik zeigt Konstruktionen, bei welchen das Füllelement (annulus filler) ein separat hergestelltes Bauteil ist, welches üblicherweise aus Aluminium hergestellt wird und mittels Haken an der Fan-Scheibe eingehängt ist. Das Füllelement hat die Aufgabe, die radial innenliegende Wandung des Strömungskanals in den Zwischenräumen zwischen den Fan-Schaufeln zu bilden und einen ungestörten Strömungsfluss zu ermöglichen. Dabei müssen die Füllelemente insbesondere den mechanischen Anforderungen, beispielsweise den Fliehkräften genügen. Die Herstellung der Füllelemente ist, bedingt durch ihren konstruktiven Aufbau, kostenintensiv. Weiterhin haben die Füllelemente ein relativ großes Gewicht. Die Abdichtung erfolgt mittels organischen Dichtlippen, welche ebenfalls separat gefertigt werden müssen. Durch die Einhängung mittels Haken an der Fan-Scheibe ist es erforderlich, aufwendige Herstellungsschritte an der Fan-Scheibe selbst durchzuführen. Insbesondere wenn diese als Schmiedeteil gefertigt wird, ergibt sich zunächst ein erheblich größeres Gewicht des Schmiederohlings, welcher nachfolgend spanend bearbeitet werden muss, um die Hakenbereiche herzustellen. Insgesamt ergeben sich somit Bauelemente, welche sehr kostenintensiv sind und ein hohes Gewicht mit sich bringen.

Die US 2013/0266447 A1 offenbart Füllelement-Konstruktionen einer Fan-Scheibe. Dabei ist ein Füllelement vorgesehen, welches in Axialrichtung, bezogen auf die Drehachse einer Fluggasturbine, an seiner vorderen und an seiner hinteren Seite jeweils mit einem Ansatz versehen ist. Dieser ist jeweils in eine Nut am hinteren Bereich des Einlaufkonus bzw. einer Dichtscheibe eingesteckt. Dabei ist ein relativ großes Spiel vorgesehen, welches zum einen die Montage erschwert und zum anderen keine ausreichende Fixierung des Füllelements selbst sicherstellt.

Die EP 2 594 773 A2 zeigt ein Füllelement für einen Zwischenraum zwischen Fan-Schaufeln. Das Füllelement ist rückseitig in eine Dichtscheibe eingesteckt und vorderseitig in einer Nut eines Einlaufkonus aufgenommen.

Eine ähnliche Konstruktion ist aus der EP 1 013 886 A2 bekannt. Dabei ist der mittlere Bereich des Füllelements mit einem Fußelement ausgestattet, welches an einer Rotorscheibe verankert ist.

Die EP 2 253 802 A2 offenbart eine Konstruktion, bei welcher das Füllelement über seine axiale Länge mittels mehrerer Haken gehaltert ist. Dieses Grundprinzip ist auch aus der EP 2 463 482 A2 vorbekannt.

Der Erfindung liegt die Aufgabe zugrunde, einen Fan einer Fluggasturbine zu schaffen, welcher bei einfachem Aufbau und einfacher, kostengünstiger Herstellbarkeit die Nachteile des Standes der Technik vermeidet und mit optimierten Füllelementen versehen ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Dichtscheibe eine Ringnut aufweist und dass die Füllelemente rückseitig in die Ringnut eingesteckt sind und vorderseitig unter einem Randbereich des Einlaufkonus gehalten sind.

Weiterhin ist erfindungsgemäß vorgesehen, dass das Füllelement als Biegebalken ausgebildet ist und dass auf der radial inneren Seite des Füllelements zumindest ein rippenartiger, sich in Axialrichtung, bezogen auf die Triebwerksachse der Fluggasturbine, längs des Füllelements erstreckender Verstärkungsbereich ausgebildet ist. Erfindungsgemäß ist somit eine Biegebalkenkonstruktion vorgesehen, welche bei geringem Bauvolumen ein Höchstmaß an mechanischer Festigkeit aufweist. Dieses ist insbesondere im Hinblick auf die hohen Drehzahlen und die damit verbundenen Kräfte des Fans vorteilhaft. Das Füllelement
weist somit eine hohe Eigensteifigkeit auf und ist andererseits so ausgebildet, dass der vordere und der hintere Befestigungsbereich einfach und platzsparend ausgestaltet werden können. Somit vereinfacht sich die Montage des Füllelements, so dass dieses in bestehende Konstruktionen integriert werden kann.

Durch die erfindungsgemäße Konstruktion erfolgt eine Lagerung der Füllelemente nicht mehr, wie beim Stand der Technik, an der Fan-Scheibe, so dass diese mit keinen Haltemitteln oder ähnlichem versehen werden muss. Hierdurch reduziert sich das Gewicht der Fan-Scheibe erheblich. Die Gewichtsreduzierung kann bis zu 10 kg betragen. Zudem sind die Herstellungskosten für die Fan-Scheibe erheblich reduziert.

Zur rückseitigen (bezogen auf die Strömungsrichtung) Lagerung der Füllelemente ist es erfindungsgemäß lediglich erforderlich, in die Dichtscheibe z. B. eine Ringnut einzubringen. Dies kann bei der in jedem Falle erforderlichen mechanischen Bearbeitung der Dichtscheibe erfolgen, ohne dass zusätzliche aufwendige Maßnahmen erforderlich wären. Die Einbringung der Ringnut in die Dichtscheibe bringt kein zusätzliches Gewicht mit sich. Die vorderseitige Lagerung der Füllelemente kann mittels des Einlaufkonus erfolgen, ohne dass dieser konstruktiv wesentlich verändert werden muss. Auch dies trägt zu einer erheblichen Kostenreduzierung bei.

Der Verstärkungsbereich ist erfindungsgemäß bevorzugterweise einstückig mit dem Füllelement ausgebildet. Er kann rippenartig oder stegartig in Axialrichtung oder im Wesentlichen in Axialrichtung des Füllelements verlaufen. Dieses wird somit in seiner Längsrichtung verstärkt, um die erforderliche Biegefestigkeit zu erhalten. Erfindungsgemäß können einer oder mehrere Verstärkungsbereiche ausgebildet sein. Bei mehreren Verstärkungsbereichen können diese parallel zueinander verlaufen. In günstiger Ausgestaltung der Erfindung ist es auch möglich, den Verstärkungsbereich als Hohlprofil auszubilden. Dies bedeutet, dass das Füllelement selbst zumindest in einem mittleren Bereich kastenförmig oder hohlprofilartig ausgestaltet ist. Hierbei kann in besonders einfacher Weise auf die baulichen Gegebenheiten Rücksicht genommen werden, insbesondere auf die Konstruktion der Fan-Scheibe, die zur Verwendung der erfindungsgemäßen Füllelemente nicht modifiziert werden muss. Durch die Anordnung des Verstärkungsbereichs ist es möglich, das Füllelement den jeweiligen Anforderungen optimal anzupassen. Im Hinblick auf die Biegebalkenkonstruktion können erfindungsgemäß somit die Bereiche des Füllelements verstärkt werden, welche einer besonderen Belastung ausgesetzt sind. Der Verstärkungsbereich kann somit, wie erwähnt, entweder nur in einem mittleren Bereich des Füllelements ausgebildet sein oder über dessen gesamte Länge oder dessen gesamte Breite. Somit können der vordere und der hintere Einsteckbereich sowie seitliche Randbereiche mit einer geringeren, nicht verstärkten Dicke ausgebildet werden, insbesondere auch um die Montage zu vereinfachen.

Die Füllelemente sind bevorzugterweise als Kunststoffspritzgussteile oder als endlosfaserverstärkte Composite-Teile ausgebildet. Hierdurch ist es möglich, die Füllelemente der durch die Wölbung der Fan-Schaufeln vorgegebenen aufwendigen Geometrie der Zwischenräume in einfacher Weise anzupassen. Somit ist es möglich, die Füllelemente passgenau herzustellen, so dass auf zusätzliche Abdichtungen verzichtet werden kann. Wird nicht auf die organischen Abdichtungen verzichtet, so können diese mit ins Formwerkzeug eingelegt werden und integral beim Spritzguss oder RTM oder Compression moulding verbunden werden.

Die Füllelemente sind, wie erwähnt, als Biegebalken ausgebildet, um eine ausreichende Stabilität gegenüber den auftretenden Fliehkräften aufzuweisen. Dabei spielt die erfindungsgemäß vorgesehene Materialauswahl eine große Rolle, da die Füllelemente bei Verwendung eines der Materialien jeweils mit sehr geringem Gewicht herstellbar sind. Hierdurch verringern sich die auftretenden Fliehkräfte, so dass es zu einer geringeren Verformung der Füllelemente kommt.

In besonders vorteilhafter Ausgestaltung ist vorgesehen, dass die Füllelemente vorderseitig einen Hakenbereich aufweisen, welcher eine Verhakung unter den Einlaufkonus ermöglicht. Rückseitig sind die Füllelemente bevorzugterweise mit einem Einsteckvorsprung versehen, welcher insbesondere so ausgebildet ist, dass er beim Einstecken in die Ringnut der Dichtscheibe eine Klemmpassung aufweist. Hierdurch vereinfacht sich die Montage ganz erheblich, da die einzelnen Füllelemente mit ihren Einsteckvorsprüngen in die Ringnut der Dichtscheibe eingesteckt werden können und in dieser Position durch die Klemmpassung gehalten werden, bis der Einlaufkonus montiert ist.

Die Füllelemente können bevorzugterweise aus einem faserverstärkten Kunststoff gefertigt sein. Dabei sind sowohl Glasfasern als auch Karbonfasern verwendbar. Bei einem Spritzgussverfahren können dabei kürzere Fasern verwendet werden, während bei einem Formpressen (compression moulding) längere Verstärkungsfasern verwendet werden können. Eine weitere Variante ist die Herstellung mit Endlosfaserverstärung über das sogenannte RTM Verfahren (Resin Transfer Moulding), hierbei werden die höchsten mechanischen Festigkeiten bei vertretbaren Kosten erreicht.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte Schnittansicht von Füllelementen gemäß dem Stand der Technik,
- Fig. 3: eine Schnittansicht, analog Fig. 2, eines erfindungsgemäßen Ausführungsbeispiels,
- Fig. 4 bis 6: Ansichten eines Füllelements gemäß Fig. 3 in Draufsicht, Seitenansicht und Unteransicht,
- Fig. 7 und 8: Ansichten analog Fig. 3 mit geänderten Füllelementen,
- Fig. 9: Ausgestaltungen der Ringnut und der Einsteckvorsprünge,
- Fig. 10: eine Unteransicht eines weiteren Ausführungsbeispiels analog der Fig. 6,
- Fig. 11: eine schematische Seitenansicht in Darstellung der Biegebalkenkonstruktion und eines kastenförmigen Verstärkungsbereichs,
- Fig. 12: eine Unteransicht, analog den Fig. 6 und 10, eines Ausführungsbeispiels mit einem kastenförmigen Verstärkungsbereich, und
- Fig. 13: eine Schnittansicht des Ausführungsbeispiels der Fig. 12.

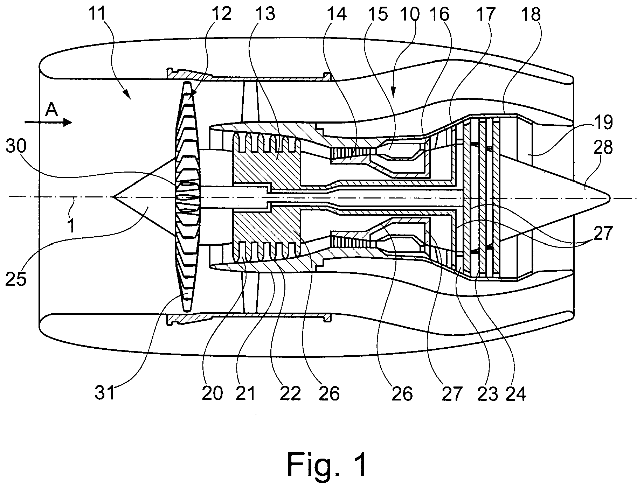

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kern-Triebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

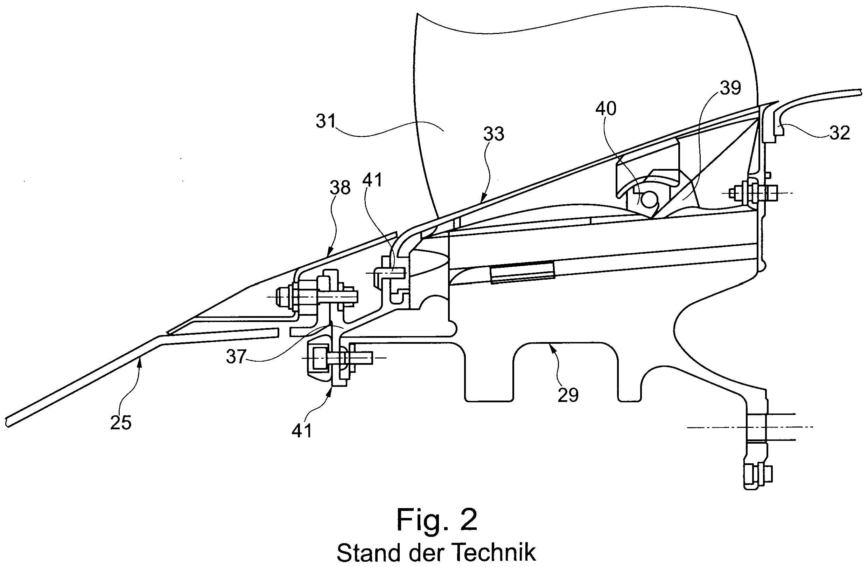

Die Fig. 2 zeigt in einer vereinfachten Axialschnitt-Ansicht ein Füllelement gemäß dem Stand der Technik sowie die Befestigung des Füllelements.

Die Fig. 2 zeigt insbesondere einen Einlaufkonus 25, welcher an einem vorderen Haltering 37 befestigt ist. Um den Befestigungsbereich abzudecken, ist eine vordere ringartige Verkleidung 38 vorgesehen.

Eine Fan-Scheibe 29 trägt um den Umfang verteilt mehrere Fan-Schaufeln, welche (s. Fig. 1) einen Zwischenraum 30 bilden. Dieser Zwischenraum 30 wird mittels Füllelementen 33 geschlossen.

Rückseitig der Fan-Scheibe 29 ist eine Dichtscheibe 32 angeordnet.

Die Fan-Scheibe 29 ist mit einer Vielzahl von um den Umfang verteilten Haken 39 versehen, in welche Befestigungshaken 40 eingesteckt sind, welche an den einzelnen Füllelementen 33 ausgebildet sind. Die Füllelemente sind beispielsweise aus Aluminium gefertigt. Der vordere Bereich der Füllelemente 33 ist mittels einer Verschraubung 41 an dem vorderen Haltering 37 befestigt, um ein Lösen der Haken 39 und der Befestigungshaken 40 zu verhindern.

Bei den nachfolgenden Ausführungsbeispielen sind jeweils gleiche Teile mit gleichen Bezugsziffern versehen.

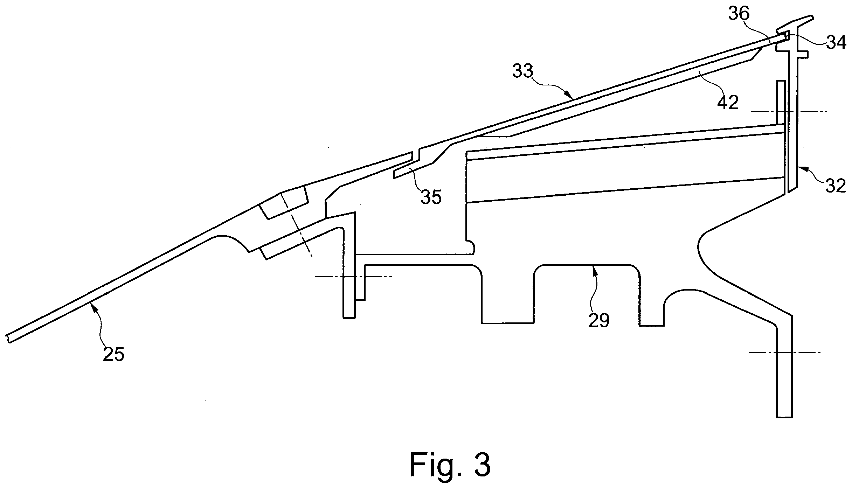

Die Fig. 3 zeigt in vereinfachter Schnittansicht, analog Fig. 2, ein erstes Ausführungsbeispiel der Erfindung. Auf die Darstellung der Fan-Schaufeln 31 wurde verzichtet. Es ist ersichtlich, dass die Fan-Scheibe 29 hinsichtlich der Befestigung der Füllelemente 33 sehr einfach ausgebildet sein kann. Die rückseitige Dichtscheibe 32 weist eine Ringnut 34 auf, welche bei der Bearbeitung der Dichtscheibe 32 in einfacher Weise spanend hergestellt werden kann. Das Füllelement 33, welches beispielsweise als Kunststoffspritzgussteil hergestellt ist, weist an seinem rückseitigen Ende einen Einsteckvorsprung 36 auf, welcher mittels einer Klemmpassung in die Ringnut 34 einsteckbar ist und eine hintere Einschnapplippe bildet. An dem vorderen Bereich ist das Füllelement 33 mit einem sich über seine Breite erstreckenden Hakenbereich 35 versehen. Mittels des Hakenbereichs 35 wird das Füllelement 33 unter dem Rand des Einlaufkonus 25 gehalten.

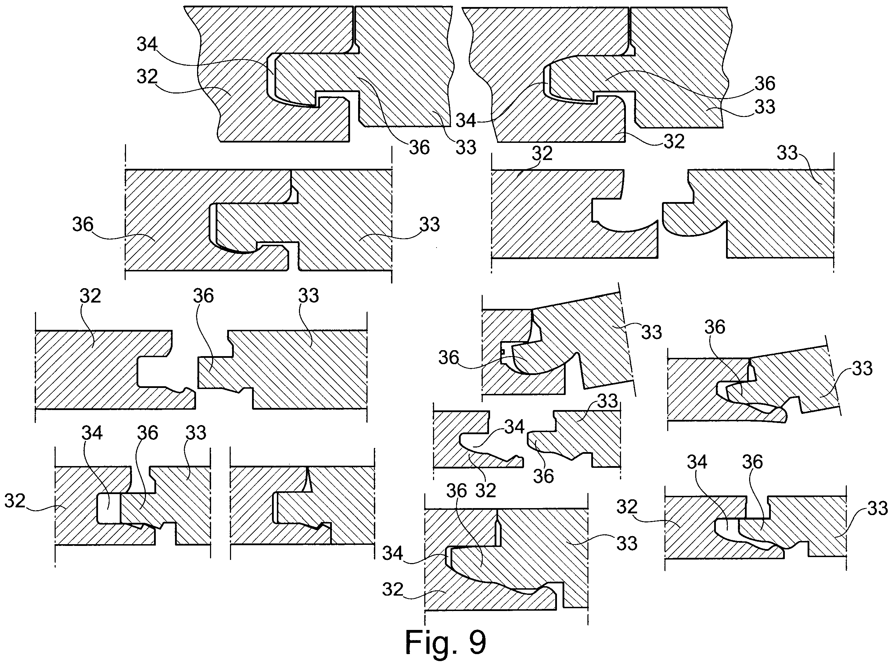

Die Fig. 9 zeigt unterschiedlichste Ausgestaltungsvarianten des rückseitigen Einsteckvorsprungs 36. Dabei ist ersichtlich, dass das Füllelement 33 zur Montage in die Ringnut 34 der Dichtscheibe 32 eingesteckt und dort verankert und gehalten wird. Es versteht sich, dass die unterschiedlichen Ausgestaltungsvarianten der Fig. 9 nicht beschränkend für die Erfindung sind. Vielmehr ist auch eine einfache Klemmkonstruktion möglich.

An seiner Unterseite ist das Füllelement 33 mit einem Verstärkungsbereich 42 versehen, welcher beispielsweise rippenartig ausgebildet sein kann und/oder mit Fasern verstärkt ist. Es können 1 bis 10 derartige Verstärkungsbereiche vorgesehen sein, welche zueinander parallel oder bogenförmig ausgebildet sind.

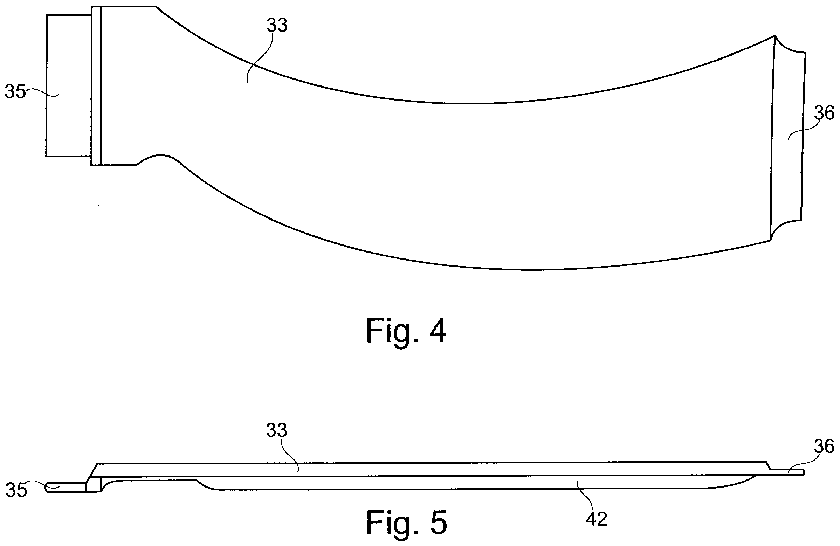

Die Fig. 4 zeigt eine Draufsicht auf ein erfindungsgemäßes Füllelement 33 gemäß einer ersten Ausgestaltungsvariante. Dabei ist insbesondere die aufwendige Geometrie ersichtlich, welche durch die Wölbung der Fan-Schaufeln 31 (nicht dargestellt) bedingt ist. Die Oberfläche des Füllelements 33 ist mit einer aerodynamisch optimierten Oberfläche versehen.

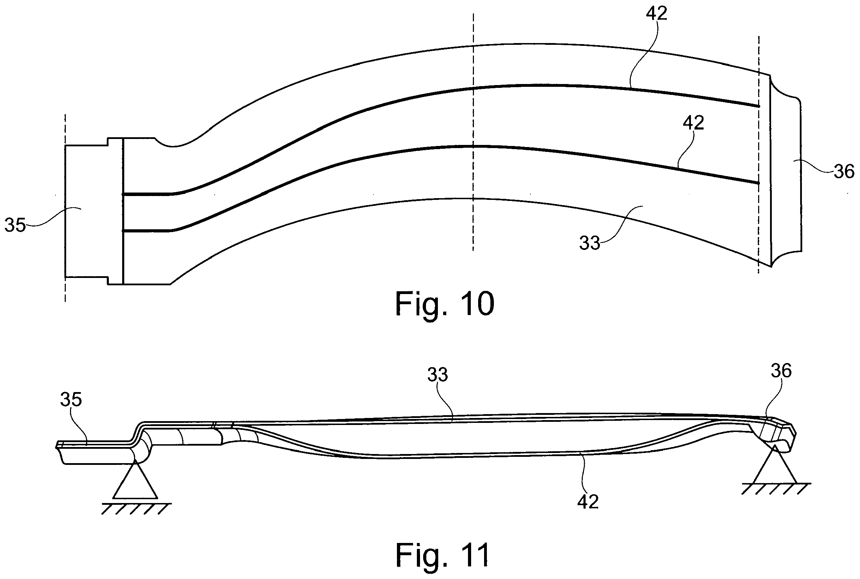

Die Fig. 5 zeigt eine Seitenansicht, aus welcher sich insbesondere der Verstärkungsbereich 42 ergibt. Insgesamt ist ersichtlich, dass das Füllelement 33 gewichtssparend gefertigt werden kann. Unterschiedliche Konstruktionen des Verstärkungsbereichs 42 werden anhand der nachfolgenden Ausführungsbeispiele im Einzelnen erläutert. Die Fig. 5 zeigt bereits, dass sich der Verstärkungsbereich 42 bevorzugt über einen mittleren Bereich des Füllelements 33 erstreckt, so dass dieser eine ausreichende Festigkeit als Biegebalken aufweist. Dies wird insbesondere in Verbindung mit dem Ausführungsbeispiel der Fig. 11 nachfolgend noch erläutert.

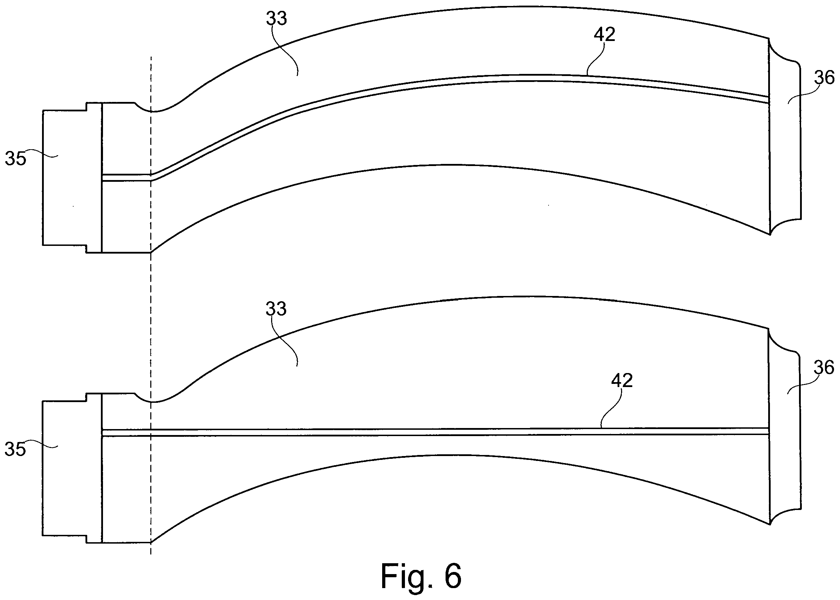

Die Fig. 6 zeigt zwei Unteransichten von modifizierten Ausführungsbeispielen, aus welchen ersichtlich ist, dass bei dem Ausführungsbeispiel ein bis 10 stegartige Verstärkungsbereiche 42 vorgesehen sind, wobei der Verstärkungsbereich 42 bogenförmig (obere Abbildung) oder geradlinig und achsenparallel (untere Abbildung) verlaufen kann. Die Fig. 10 zeigt eine weitere Ausgestaltungsvariante, bei welcher zwei stegartige Verstärkungsbereiche 42 vorgesehen sind. Diese erstrecken sich im Wesentlichen parallel zueinander, wobei die Krümmung oder bogenförmige Ausgestaltung der Außenkontur der Seitenflächen des Füllelements 33 folgen kann. Die beiden Verstärkungsbereiche 42 sind angrenzend an den Hakenbereich 35 zueinander parallel und im Wesentlichen in Axialrichtung, bezogen auf die Triebwerksachse, angeordnet. Bei diesen Ausgestaltungsvarianten der Fig. 6 und 10 sind die Verstärkungsbereiche 42 einstückig mit dem Füllelement 33 ausgebildet und in Form von Rippen ausgestaltet.

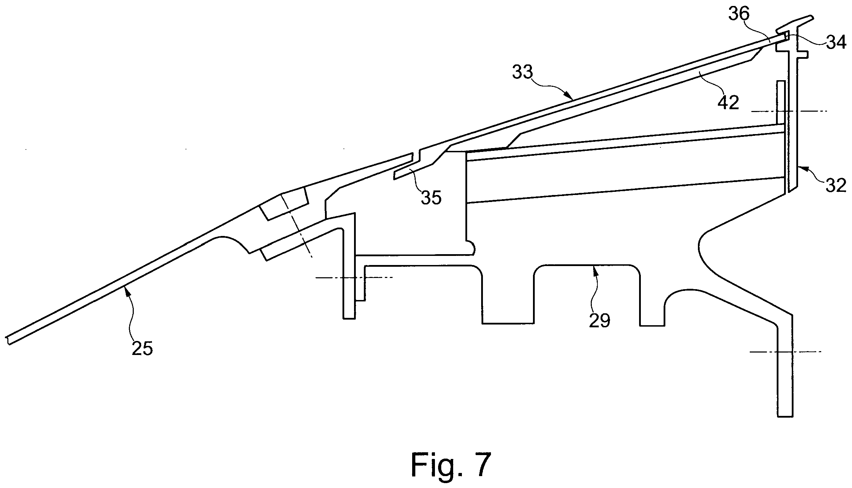

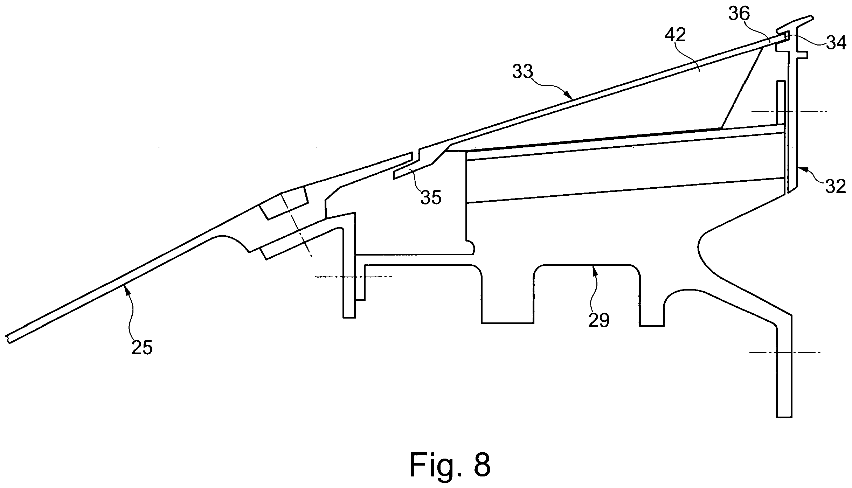

Die Figuren 7 und 8 zeigen abgewandelte Ausführungsbeispiele der Füllelemente 33 und der Verstärkungsbereiche 42 analog Fig. 3. In Fig. 7 ergibt sich zwischen dem Verstärkungsbereich 42 und der Fanscheibe 29 ein geringerer Abstand, ein vorderer Teil des Verstärkungsbereichs 42 liegt an der Fanscheibe 29 an. Bei Fig. 8 liegt der Verstärkungsbereich 42 in ganzer Länge an der Fanscheibe 29 an. Hierdurch werden Beschädigungen beim Auftreffen von Teilen oder bei Vogelschlag vermieden, Verformungen des Verstärkungsbereichs werden vermindert.

Die Fig. 11 verdeutlicht die erfindungsgemäße Biegebalkenkonstruktion. Dabei ergibt sich, dass im Bereich des hinteren Einsteckvorsprungs 36 eine feste Lagerung des Füllelements 33 erfolgt. Hierzu wird nochmals auf die verschiedenen Ausführungsvarianten gemäß Fig. 9 Bezug genommen. Der Einsteckvorsprung 36 wird somit fest an der Dichtscheibe 32 verankert. Am vorderen Bereich, an welchem der Hakenbereich 35 ausgebildet ist, ist eine geringfügige Relativbewegung, insbesondere in Axialrichtung und/oder Radialrichtung, möglich.

Die Fig. 11 zeigt weiterhin, dass der Verstärkungsbereich 42 als Hohlprofil oder Kastenprofil ausgebildet sein kann. Hierdurch wird die Gesamtsteifigkeit des Füllelements 33 erheblich erhöht. Dies ist nicht nur hinsichtlich der auftretenden Fliehkräfte oder Zentripetalkräfte von Vorteil, sondern auch im Hinblick auf das Auftreffen von Fremdkörpern, beispielsweise bei einem Vogelschlag.

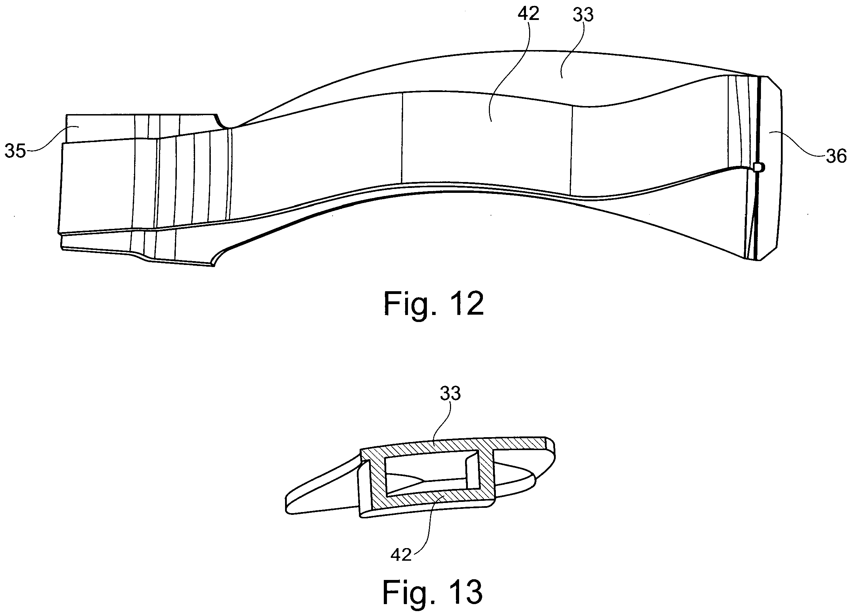

Die Fig. 12 zeigt ein weiteres Ausführungsbeispiel in Unteransicht, analog den Fig. 6 und 10. Dabei ist insbesondere das in Fig. 11 gezeigte Kastenprofil des Verstärkungsbereichs 42 verdeutlicht. Wie sich bereits aus der Darstellung der Fig. 11 ergibt, ist es erfindungsgemäß möglich, das Füllelement 33 aus zumindest zwei Schichten aufzubauen. Die äußere Schicht bildet das eigentliche Füllelement 33, wobei die radial innenliegende Schicht die Wandung des Verstärkungsbereichs 42 bildet. Aus Fig. 12 ergibt sich, dass unterschiedliche Anordnungen und Ausgestaltungen des Verstärkungsbereichs 42 eine optimale Anpassung an die auftretenden Biegekräfte ermöglichen. Die Schnittansicht der Fig. 13 verdeutlicht den Aufbau des Kastenprofils des Verstärkungsbereichs 42. Insgesamt führen diese Konstruktionen mit einem geschlossenen rohrartigen Querschnitt zu einer erheblichen Erhöhung der Torsionssteifigkeit des Füllelements 33. Auftretende Normallasten werden durch das Füllelement 33, insbesondere dessen radial außenliegende Schale getragen, während Schublasten von dem Verstärkungsbereich 42 aufgenommen werden. Der wellenartige Verlauf des Verstärkungsbereichs 42 (s. insbesondere Fig. 10 und 12) erhöht zusätzlich das Torsionsmoment.

Die Erfindung beschreibt somit eine Leichtbauweise der Füllelemente, bei der diese nicht an der Fan-Scheibe befestigt sind, sondern als Biegebalken ausgebildet werden, die vorderseitig an dem Einlaufkonus und rückwärtig an der Dichtscheibe verankert sind. Fertigungstechnisch entfällt somit die Herstellung der Haken an der Fan-Scheibe. Weiterhin können sowohl die Fan-Scheibe als auch die Füllelemente geometrisch stark vereinfacht ausgebildet und damit gewichtsmäßig leichter und kostengünstiger hergestellt werden. Hinsichtlich der Dichtscheibe sind keine oder nur geringfügige Modifikationen erforderlich, da es lediglich erforderlich ist, die Ringnut einzuarbeiten. Der Einlaufkonus erfordert im Wesentlichen keine konstruktiven Änderungen.

Bedingt durch das geringe Gewicht der Füllelemente sind die Folgeschäden für das Gasturbinentriebwerk bei einem Versagen der Füllelemente gering. Ein weiterer Vorteil besteht darin, dass die Füllelemente nach Entfernen des Einlaufkonus in einfacher Weise ausgetauscht werden können.

### Bezugszeichenliste

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kern-Triebwerksgehäuse
- 22: Kompressorlaufschaufeln
- 23: Leitschaufeln
- 24: Turbinenrotorschaufeln
- 25: Einlaufkonus
- 26: Kompressortrommel oder -scheibe
- 27: Turbinenrotornabe
- 28: Auslasskonus
- 29: Fan-Scheibe
- 30: Zwischenraum
- 31: Fan-Schaufel
- 32: Dichtscheibe
- 33: Füllelement
- 34: Ringnut
- 35: Hakenbereich
- 36: Einsteckvorsprung
- 37: vorderer Haltering
- 38: vordere Verkleidung
- 39: Haken
- 40: Befestigungshaken
- 41: Verschraubung
- 42: Verstärkungsbereich

## Patentansprüche

1. Fluggasturbine mit einer Fan-Scheibe (29), an welcher um den Umfang verteilt, zueinander einen Zwischenraum (30) bildende Fan-Schaufeln (31) befestigt sind, mit einer rückseitig zur Fan-Scheibe (29) angeordneten Dichtscheibe (32) und mit einem an der Vorderseite der Fan-Scheibe (29) gelagerten Einlaufkonus (25), sowie mit in den Zwischenräumen (30) angeordneten Füllelementen (33), wobei die Dichtscheibe (32) eine Ringnut (34) aufweist und wobei die Füllelemente (33) rückseitig in die Ringnut (34) eingesteckt sind und vorderseitig unter einem Randbereich des Einlaufkonus (25) gehalten sind, **dadurch gekennzeichnet, dass** die Füllelemente (33) als Biegebalken ausgebildet sind, und dass auf der radial inneren Seite des Füllelements (33) zumindest ein rippenartiger, sich in Axialrichtung längs des Füllelements (33) erstreckender Verstärkungsbereich (42) ausgebildet ist.

2. Fluggasturbine nach Anspruch 1, **dadurch gekennzeichnet, dass** der Verstärkungsbereich (42) einstückig mit dem Füllelement (33) ausgebildet ist.

3. Fluggasturbine nach Anspruch 1 oder 2, **dadurch gekennzeichnet, dass** mehrere Verstärkungsbereiche (42) ausgebildet sind.

4. Fluggasturbine nach einem der Ansprüche 1 bis 3, **dadurch gekennzeichnet, dass** der Verstärkungsbereich (42) als Hohlprofil ausgebildet ist.

5. Fluggasturbine nach einem der Ansprüche 1 bis 4, **dadurch gekennzeichnet, dass** sich der Verstärkungsbereich (42) über die gesamte Länge des Füllelements (33) erstreckt.

6. Fluggasturbine nach einem der Ansprüche 1 bis 4, **dadurch gekennzeichnet, dass** sich der Verstärkungsbereich (42) über einen mittleren Bereich des Füllelements (33) erstreckt.

7. Fluggasturbine nach einem der Ansprüche 1 bis 6, **dadurch gekennzeichnet, dass** die Füllelemente (33) als Kunststoffspritzgussteile oder als endlosfaserverstärkte Composite-Teile oder aus faserverstärktem Kunststoff gefertigt sind.

8. Fluggasturbine nach einem der Ansprüche 1 bis 7, **dadurch gekennzeichnet, dass** die Füllelemente (33) vorderseitig einen Hakenbereich (35) aufweisen.

9. Fluggasturbine nach einem der Ansprüche 1 bis8, **dadurch gekennzeichnet, dass** die Füllelemente (33) rückseitig jeweils zumindest einen Einsteckvorsprung (36) aufweisen, welcher zur Ausbildung einer Klemmpassung mit der Ringnut (34) der Dichtscheibe (32) ausgebildet ist.

10. Fluggasturbine nach einem der Ansprüche 1 bis 9, **dadurch gekennzeichnet, dass** zwischen dem Verstärkungsbereich (42) und der Fan-Scheibe (29) ein geringer Abstand besteht.

11. Fluggasturbine nach einem der Ansprüche 1 bis 10, **dadurch gekennzeichnet, dass** ein vorderer Teil des Verstärkungsbereichs (42) an der Fan-Scheibe (29) anliegt.

12. Fluggasturbine nach einem der Ansprüche 1 bis 11, **dadurch gekennzeichnet, dass** der Verstärkungsbereich (42) in ganzer Länge an der Fan-Scheibe (29) anliegt.

## Claims

1. Aircraft gas turbine with a fan disk (29) on which are fastened fan blades (31) spread over the circumference and forming an intermediate space (30) with one another, with a sealing disk (32) arranged at the rear of the fan disk (29) and with an inlet cone (25) mounted at the front of the fan disk (29), as well as with filler elements (33) arranged in the intermediate spaces (30), where the sealing disk (32) has an annular groove (34) and where the filler elements (33) are at the rear inserted into the annular groove (34) and at the front held underneath a rim area of the inlet cone (25), **characterized in that** the filler elements (33) are designed as bending beams and that on the radially inner side of the filler element (33) at least one rib-like reinforcing area (42) is provided, extending in the axial direction and longitudinally to the filler element (33).

2. Aircraft gas turbine in accordance with Claim 1, **characterized in that** the reinforcing area (42) is designed in one piece with the filler element (33).

3. Aircraft gas turbine in accordance with Claim 1 or 2, **characterized in that** several reinforcing areas (42) are provided.

4. Aircraft gas turbine in accordance with one of the Claims 1 to 3, **characterized in that** the reinforcing area (42) is designed as a hollow section.

5. Aircraft gas turbine in accordance with one of the Claims 1 to 4, **characterized in that** the reinforcing area (42) extends over the entire length of the filler element (33).

6. Aircraft gas turbine in accordance with one of the Claims 1 to 4, **characterized in that** the reinforcing area (42) extends over a center area of the filler element (33).

7. Aircraft gas turbine in accordance with one of the Claims 1 to 6, **characterized in that** the filler elements (33) are designed as plastic injection-moulded parts or as continuous fiber-reinforced composite parts, or are made out of fiber-reinforced plastic.

8. Aircraft gas turbine in accordance with one of the Claims 1 to 7, **characterized in that** the filler elements (33) have a hook area (35) at the front.

9. Aircraft gas turbine in accordance with one of the Claims 1 to 8, **characterized in that** the filler elements (33) are each provided at the rear with at least one insert projection (36) which is designed for providing a clamp-fit with the annular groove (34) of the sealing disk (32).

10. Aircraft gas turbine in accordance with one of the Claims 1 to 9, **characterized in that** there is a short distance between the reinforcing area (42) and the fan disk (29).

11. Aircraft gas turbine in accordance with one of the Claims 1 to 10, **characterized in that** a front part of the reinforcing area (42) is in contact with the fan disk (29).

12. Aircraft gas turbine in accordance with one of the Claims 1 to 11, **characterized in that** the reinforcing area (42) is in contact with the fan disk (29) over its full length.

## Revendications

1. Turbine à gaz aéronautique avec un disque de soufflante (29) sur lequel sont fixées des aubes de soufflante (31) réparties sur le pourtour et formant un espace intermédiaire (30) entre elles, avec un disque d'étanchéité (32) disposé à l'arrière du disque de soufflante (29), et avec un cône d'entrée (25) logé sur la face avant du disque de soufflante (29), ainsi qu'avec des éléments de remplissage (33) placés dans les espaces intermédiaires (30), sachant que le disque d'étanchéité (32) présente une gorge annulaire (34) et que les éléments de remplissage (33) sont insérés à l'arrière dans la gorge annulaire (34) et maintenus à l'avant sous une zone marginale du cône d'entrée (25), **caractérisée en ce que** les éléments de remplissage (33) sont conçus en tant que barres de flexion, et que sur la face radiale intérieure de l'élément de remplissage (33) est formée au moins une zone de renforcement (42) nervurée s'étendant dans le sens axial le long de l'élément de remplissage (33).

2. Turbine à gaz aéronautique selon la revendication n° 1, **caractérisée en ce que** la zone de renforcement (42) est formée en une seule pièce avec l'élément de remplissage (33).

3. Turbine à gaz aéronautique selon la revendication n° 1 ou n° 2, **caractérisée en ce que** plusieurs zones de renforcement (42) sont formées.

4. Turbine à gaz aéronautique selon une des revendications n° 1 à n° 3, **caractérisée en ce que** la zone de renforcement (42) est formée en tant que profilé creux.

5. Turbine à gaz aéronautique selon une des revendications n° 1 à n° 4, **caractérisée en ce que** la zone de renforcement (42) s'étend sur toute la longueur de l'élément de remplissage (33).

6. Turbine à gaz aéronautique selon une des revendications n° 1 à n° 4, **caractérisée en ce que** la zone de renforcement (42) s'étend sur une zone centrale de l'élément de remplissage (33).

7. Turbine à gaz aéronautique selon une des revendications n° 1 à n° 6, **caractérisée en ce que** les éléments de remplissage (33) sont fabriqués en tant que pièces en plastique moulées par injection ou pièces composites renforcées par des fibres continues ou sont en plastique renforcé par des fibres.

8. Turbine à gaz aéronautique selon une des revendications n° 1 à n° 7, **caractérisée en ce que** les éléments de remplissage (33) présentent à l'avant une zone en forme de tenon (35).

9. Turbine à gaz aéronautique selon une des revendications n° 1 à n° 8, **caractérisée en ce que** les éléments de remplissage (33) présentent respectivement à l'arrière au moins un épaulement d'insertion (36) qui est conçu pour former un ajustement par serrage avec la gorge annulaire (34) du disque d'étanchéité (32).

10. Turbine à gaz aéronautique selon une des revendications n° 1 à n° 9, **caractérisée en ce que** la distance entre la zone de renforcement (42) et le disque de soufflante (29) est faible.

11. Turbine à gaz aéronautique selon une des revendications n° 1 à n° 10, **caractérisée en ce qu'**une partie avant de la zone de renforcement (42) s'appuie sur le disque de soufflante (29).

12. Turbine à gaz aéronautique selon une des revendications n° 1 à n° 11, **caractérisée en ce que** la zone de renforcement (42) s'appuie sur toute sa longueur sur le disque de soufflante (29).
